# DEMANDE DE BREVET EUROPEEN

(11) **EP 3 157 261 A1**
(43) Date de publication de la demande: **19.04.2017**
(21) Numéro de dépôt: 16193799.0
(22) Date de dépôt: 13.10.2016
(51) Int. Cl.: H04N 21/2365, H04N 21/234

(54) **PROCÉDÉ ET SYSTÈME D'ENCODAGE ET DE MULTIPLEXAGE DE PROGRAMMES D'UNE PLURALITÉ DE CHAÎNES DE TÉLÉVISION**

(30) Priorité: 13.10.2015 FR 1559714; 02.05.2016 FR 1653964
(71) Demandeur: Ericsson IT Solutions & Services SAS, 91399 Massy (FR)
(72) Inventeur: BLESTEL, Médéric, 35170 Bruz (FR); MILET, Olivier, 35760 Saint Gregoire (FR); FAYOUX, Thomas, 35590 Saint Gilles (FR)
(74) Mandataire: Vidon Brevets & Stratégie

(57) **Abrégé**

Il est proposé une solution d'encodage/multiplexage de programmes de chaînes de télévision nationales et d'au moins un groupe de chaînes régionales. Une pluralité d'encodeurs (E_{N1}-E_{N6}, E_{R1}-E_{R4}) fonctionnent en débit binaire variable (chacun est qualifié de national ou régional selon qu'il reçoit les programmes d'une chaîne de télévision nationale ou régionale). Un dispositif agrégateur (AG) génère au moins une information commune (Ig) à partir d'informations (I_{R1}-I_{R4}) provenant des encodeurs régionaux. Un allocateur statistique (AS) la reçoit, ainsi que des informations (I_{N1}-I_{N6}) provenant des encodeurs nationaux, et fournit un jeu dédié de paramètres d'encodage (J_{N1}-J_{N6}) à chaque encodeur national, et un jeu commun de paramètres d'encodage (J_{g}) aux encodeurs régionaux. Pour chaque région, un multiplexeur (M1-M4) génère un signal multiplexé à partir de signaux de sortie (S_{N1}-S_{N6}, S_{R1}-S_{R4}) des encodeurs nationaux et du signal de sortie de l'encodeur associé à la chaîne régionale de cette région.

## Description

### 1. DOMAINE TECHNIQUE

L'invention se positionne dans le domaine de la diffusion de télévision. L'objectif est de diffuser un maximum de canaux (aussi appelés « flux » ou encore « chaînes de télévision ») pour une bande passante donnée afin de réduire les coûts de transmission, mais en garantissant une bonne qualité vidéo. La diffusion peut se faire à travers différents moyens, et notamment (mais non exclusivement) par diffusion terrestre, câble ou télévision sur IP (ou IPTV, pour « Internet Protocol TeleVision » en anglais).

Plus précisément, l'invention concerne un procédé (ainsi qu'un système correspondant) d'encodage et de multiplexage de programmes d'une pluralité de chaînes de télévision comprenant des chaînes nationales, fournissant des programmes nationaux, et au moins un groupe de chaînes régionales, associées chacune à une région différente et fournissant des programmes régionaux, pendant des fenêtres régionales, et partageant des programmes nationaux, hors des fenêtres régionales.

Un programme de télévision comprend une pluralité de flux binaires (par exemple un flux vidéo, deux flux audio et un flux de métadonnées).

Traditionnellement, les chaînes de télévision étaient diffusées à débit binaire constant (mode CBR, pour « Constant Bit Rate » en anglais) afin de garantir une bonne qualité vidéo. Cependant, par nature, chaque type de contenu nécessite un débit binaire différent. En effet, un contenu de sport nécessitera plus de débit binaire qu'une simple émission de télévision.

Afin d'optimiser la bande passante, le multiplexage statistique a été introduit. Il permet d'allouer dynamiquement un débit binaire en fonction du contenu. Les flux au sein d'un système à multiplexage statistique sont donc encodés à un débit binaire variable (mode VBR, pour « Variable Bit Rate » en anglais). Le multiplexage statistique va permettre de réduire le débit binaire moyen utilisé par flux, et ainsi d'optimiser la bande passante en rajoutant des chaînes sans dégrader la qualité. Le gain en bande passante est corrélé au nombre de flux dont il est composé (c'est-à-dire au nombre de flux sur lesquels porte le multiplexage statistique).

Cependant, au sein d'un tel système à multiplexage statistique, il convient parfois de prendre en compte des décrochages régionaux. En effet, pour certains groupes de chaînes de télévision régionales, il existe une pratique appelée «décrochage régional », consistant à remplacer un programme national (commun à ce groupe de chaînes régionales) par un programme régional (par exemple un contenu régional ou une publicité locale) pendant un certain temps, appelé la «fenêtre régionale ». C'est par exemple le cas en France, pour les chaînes régionales de « France 3 » (marque déposée) qui diffusent un même contenu national en dehors des fenêtres régionales, et chacune un contenu régional spécifique pendant les fenêtres régionales.

### 2. ARRIÈRE-PLAN TECHNOLOGIQUE

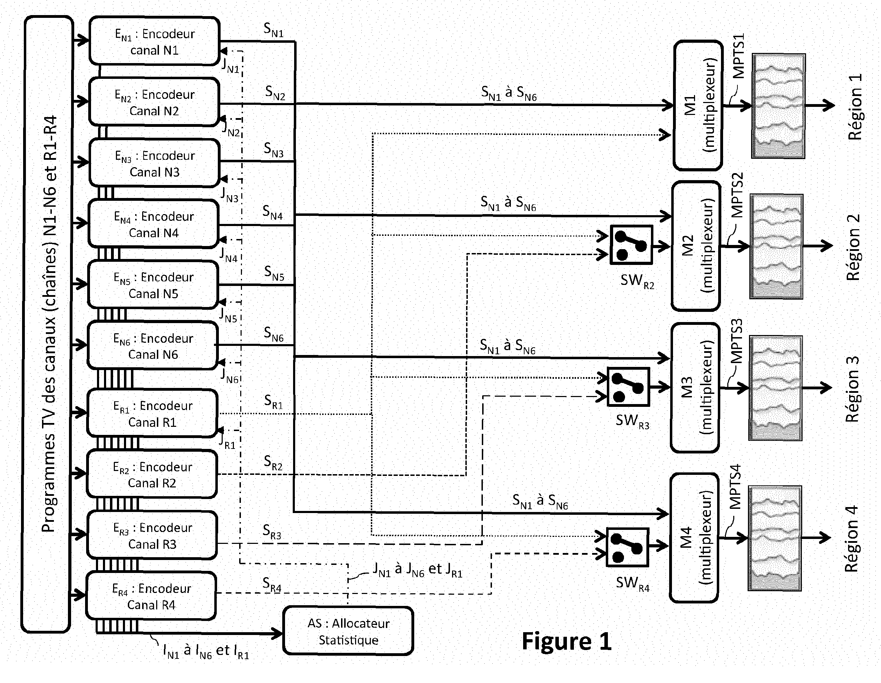

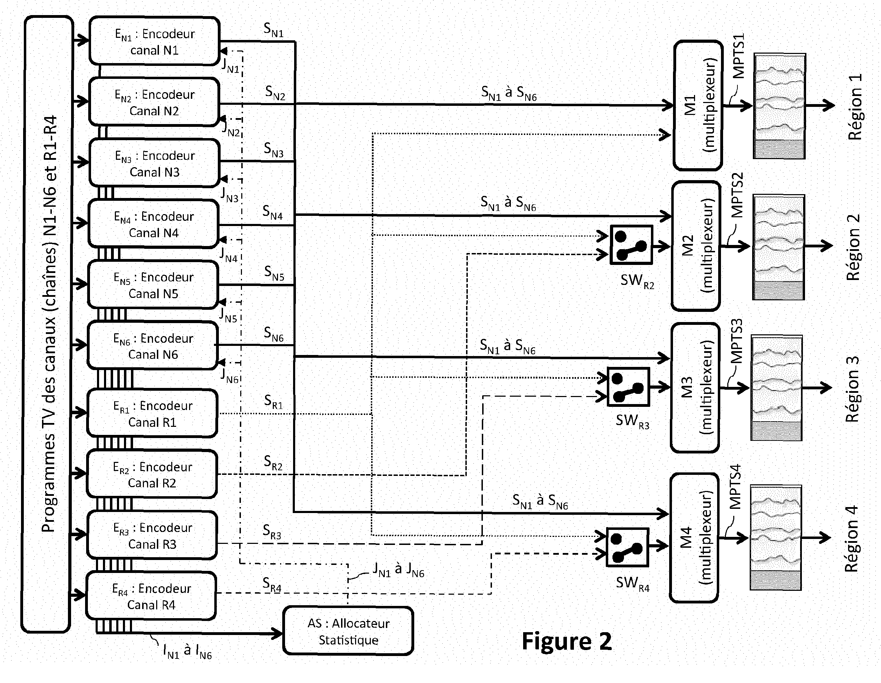

Les **figures 1** **et** **2** illustrent une première technique connue pour la prise en compte des décrochages régionaux dans un système à multiplexage statistique. Plus précisément, la figure 1 illustre le fonctionnement hors des fenêtres régionales, et la figure 2 illustre le fonctionnement pendant une fenêtre régionale.

Le système à multiplexage statistique comprend des encodeurs (associés chacun à une des chaînes de télévision), un allocateur statistique, des commutateurs et des multiplexeurs.

A titre illustratif uniquement, on considère dans la suite de la description une pluralité de chaînes de télévision (canaux) comprenant six chaînes nationales (référencées N1 à N6), fournissant des programmes nationaux, et un groupe de quatre chaînes régionales (référencées R1 à R4), associées chacune à une région différente (« région 1 » à « région 4 ») et fournissant des programmes régionaux, pendant des fenêtres régionales, et partageant des programmes nationaux, hors des fenêtres régionales.

Dans ce contexte, et comme illustré sur la figure 1, les encodeurs associés aux chaînes nationales N1 à N6 sont référencés E_{N1} à E_{N6}, et ceux associés aux chaînes régionales R1 à R4 sont référencés E_{R1} à E_{R4}. Chaque encodeur reçoit les programmes de la chaîne de télévision qui lui est associée et génère un signal de sortie. Les signaux de sortie sont référencés S_{N1} à S_{N6} pour les encodeurs associés aux chaînes nationales N1 à N6, et S_{R1} à S_{R4} pour les encodeurs associés aux chaînes régionales R1 à R4.

Chaque encodeur est destiné à convertir des programmes de télévision non compressés en programmes de télévision compressés, dans le cadre d'un encodage, ou de convertir des programmes de télévision déjà compressés selon un premier format de codage en programmes de télévision compressés selon un second format de codage, dans le cas du transcodage. Dans la suite du document, on confondra les deux notions d'encodage et de transcodage.

Pour chaque encodeur fonctionnant en débit binaire variable (mode VBR), l'allocateur statistique (référencé AS) reçoit au moins une information provenant de cet encodeur et fournit un jeu de paramètres d'encodage à cet encodeur. Ainsi, dans le cas de la figure 1, les encodeurs E_{N1} à E_{N6} (associés aux chaînes nationales N1 à N6) et l'encodeur E_{R1} (associé à la chaîne régionale R1) fonctionnent en débit binaire variable (mode VBR), et l'allocateur statistique reçoit des informations (référencées I_{N1} à I_{N6} et I_{R1} respectivement) provenant de ces encodeurs et fournit un jeu de paramètres d'encodage à chacun de ces encodeurs (les différents jeux de paramètres d'encodage sont référencés J_{N1} à J_{N6} et J_{R1}). Dans le cas de la figure 2, les encodeurs E_{R1} à E_{R4} (associés aux chaînes régionales R1 à R4) fonctionnent en débit binaire constant (mode CBR), et seuls les encodeurs E_{N1} à E_{N6} (associés aux chaînes nationales N1 à N6) fonctionnent en débit binaire variable (mode VBR). L'allocateur statistique reçoit les informations I_{N1} à I_{N6} provenant de ces encodeurs et fournit un jeu de paramètres d'encodage J_{N1} à J_{N6} à chacun de ces encodeurs.

L'allocateur statistique a pour rôle de sélectionner dynamiquement le jeu de paramètres d'encodage de chaque encodeur afin d'optimiser la qualité vidéo tout en respectant la bande passante du signal multiplexé (MPTS1 à MPTS4). En d'autres termes, chaque encodeur communique avec l'allocateur statistique afin d'envoyer des informations (qui sont par exemple des données relatives à l'état de l'encodeur et à la complexité du flux à encoder) et recevoir de nouveaux paramètres dynamiques d'encodage. Pour un flux donné, chaque jeu de paramètres d'encodage est défini non seulement en fonction des critères d'encodage du flux concerné mais également en fonction des critères des autres flux gérés par l'allocateur statistique. L'allocateur statistique peut être présent sous différentes formes : il peut notamment se présenter comme un composant indépendant ou bien être incorporé dans un des composants déjà existants du système (encodeur ou multiplexeur par exemple).

Pour chacune des régions 2, 3 et 4, le système comprend un commutateur (switch) (référencé SW_{R2}, SW_{R3} ou SW_{R4}) dont la sortie peut être sélectivement, soit le signal de sortie S_{R1} de l'encodeur E_{R1} associé à la chaîne régionale R1, soit le signal de sortie S_{Ri} de l'encodeur E_{Ri} associé à la chaîne régionale Ri, avec « i » égal à 2, 3 ou 4 selon que la région considérée est la région 2, 3 ou 4.

Pour chaque région, associée à une chaîne régionale donnée (parmi celles référencées R1 à R4), un multiplexeur (parmi ceux référencés M1 à M4) générant un signal multiplexé (parmi ceux référencés MPTS1 à MPTS4), résultant du multiplexage des signaux de sortie S_{N1} à S_{N6} des encodeurs associés aux chaînes nationales et du signal de sortie S_{R1} de l'encodeur associé à la chaîne régionale donnée, pour la région 1, ou du signal de sortie du commutateur SW_{R2}, SW_{R3} ou SW_{R4}, pour chacune des régions 2, 3 et 4. Les signaux multiplexés sont par exemple des flux de transport multiprogrammes (ou MPTS, pour « Multiple Program transport Stream » en anglais).

La figure 1 illustre le fonctionnement du système hors des fenêtres régionales. Dans ce cas, les programmes des chaînes régionales R1 à R4 sont identiques, et correspondent à un même contenu national (programme national). L'allocateur statistique gère l'ensemble de tous les programmes des chaînes nationales N1 à N6, et le programme d'une seule des chaînes régionales (R1 dans cet exemple, grâce au positionnement des commutateurs SW_{R2}, SW_{R3} et SW_{R4} en position « haute »). Les programmes des chaînes nationales N1 à N6 et régionales R1 à R4 sont encodés en temps réels par la ferme d'encodeurs. Comme déjà indiqué plus haut, les encodeurs E_{N1} à E_{N6} et E_{R1} fonctionnent en débit binaire variable (mode VBR). L'allocateur statistique reçoit des informations I_{N1} à I_{N6} et I_{R1} provenant de ces encodeurs et leur fournit les jeux de paramètres d'encodage J_{N1} à J_{N6} et J_{R1} (un jeu par encodeur). Les débits binaires calculés par l'allocateur statistique sont variables. Chaque multiplexeur (un par région) génère un signal multiplexé contenant les programmes de toutes les chaînes nationales N1 à N6 (sous la forme encodée S_{N1} à S_{N6}, en sortie des encodeurs E_{N1} à E_{N6}) et le programme de la chaîne régionale R1 (sous la forme encodée S_{R1}, en sortie de l'encodeur E_{R1}). Les signaux multiplexés MPTS1 à MPTS4 (un par région) sont donc identiques (même débit cumulé et respect des contraintes du multiplexage statistique).

La figure 2 illustre le fonctionnement du système pendant une fenêtre régionale. Pendant une fenêtre régionale, les programmes des chaînes régionales R1 à R4 ne sont pas identiques, chaque chaîne régionale qui effectue un décrochage régional pouvant transmettre un contenu régional (programme régional) qui lui est propre. Lorsqu'un décrochage régional est signalé (par exemple par un déclencheur de type SCTE-35 ou SCTE 104, ou un quelconque déclencheur externe), une reconfiguration dynamique de certains composants clés du système est effectuée. Ainsi, les encodeurs E_{R1} à E_{R4} (associés aux chaînes régionales R1 à R4) fonctionnent en débit binaire constant (mode CBR). Seuls les encodeurs E_{N1} à E_{N6} (associés aux chaînes nationales N1 à N6) fonctionnent en débit binaire variable (mode VBR). L'allocateur statistique reçoit donc uniquement les informations I_{N1} à I_{N6} provenant des encodeurs E_{N1} à E_{N6} et fournit un jeu de paramètres d'encodage J_{N1} à J_{N6} uniquement à chacun de ces encodeurs. Par ailleurs, les commutateurs SW_{R2}, SW_{R3} et SW_{R4} passent en position « basse », permettant à chacun des multiplexeurs M1 à M4 de multiplexer, avec les programmes de toutes les chaînes nationales N1 à N6 (sous la forme encodée S_{N1} à S_{N6}, en sortie des encodeurs E_{N1} à E_{N6}), le programme de l'une des chaînes régionales R1 à R4 (sous la forme encodée S_{R1} à S_{R4}, en sortie de l'un des encodeurs E_{R1} à E_{R4}). En d'autres termes, le multiplexeur M1 reçoit les signaux S_{N1} à S_{N6} et S_{R1}, le multiplexeur M2 reçoit les signaux S_{N1} à S_{N6} et S_{R2}, le multiplexeur M3 reçoit les signaux S_{N1} à S_{N6} et S_{R3}, et le multiplexeur M4 reçoit les signaux S_{N1} à S_{N6} et S_{R4}. Les signaux multiplexés MPTS1 à MPTS4 (un par région) sont donc différents.

La première technique connue présente plusieurs inconvénients lors d'un décrochage régional :
- le décrochage régional doit être simultané à travers toutes les régions. Cela implique un déclenchement très précis afin que le décrochage soit le plus transparent possible d'un point de vue expérience utilisateur. En outre, cela rend impossible de gérer des scénarios de type insertion locale de programme ou publicité sans effectuer un décrochage global à travers toutes les régions ;
- la complexité opérationnelle: le décrochage nécessite la reconfiguration dynamique des composants clés du système (à savoir, la ferme d'encodage, l'allocateur statistique, les commutateurs et les multiplexeurs), et ce de façon simultanée ;
- l'efficacité de l'allocateur statistique est impactée, ceci étant dû à la réduction de la bande passante dont une partie est allouée aux chaînes régionales, dont les programmes sont encodés à débit constant (mode CBR). Cette contrainte est nécessaire afin de garantir un débit cumulé constant au niveau de chaque région.

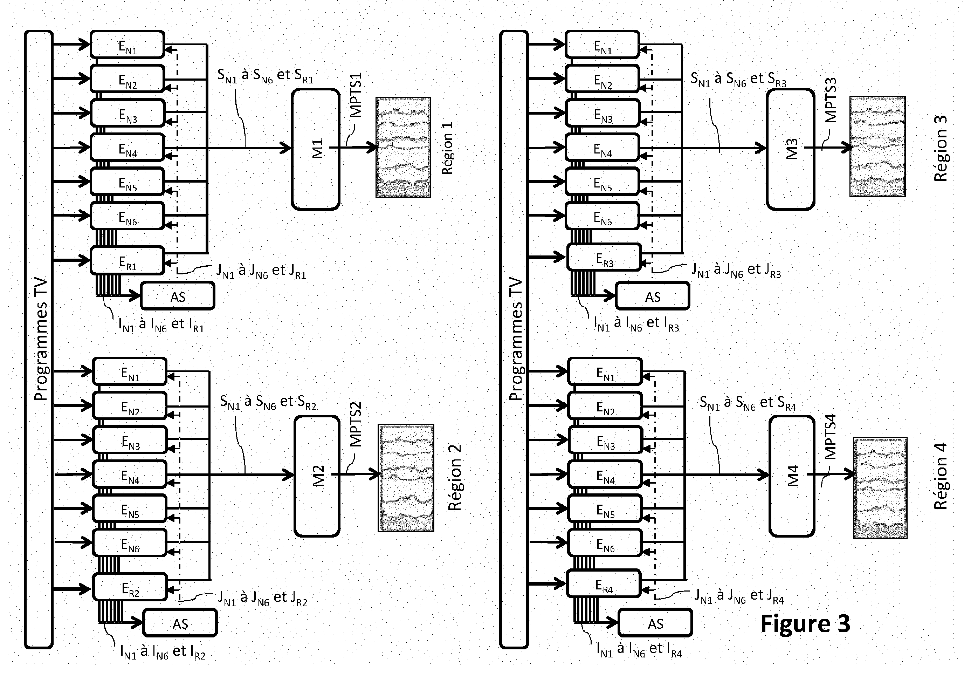

La **figure 3** illustre une deuxième technique connue pour la prise en compte des décrochages régionaux dans un système à multiplexage statistique. Par rapport à la première technique connue, il y a duplication, pour chacune des régions, d'une ferme d'encodeurs (comprenant les encodeurs associés aux chaînes nationales et un encodeur associé à la chaîne régionale de cette région) et d'un allocateur statistique. Ceci permet l'utilisation de débit binaire variable (mode VBR) pour tous les canaux (c'est-à-dire toutes les chaînes de télévision, qu'elles soient nationales ou régionales).

Plus précisément, pour une région i, avec *i* ∈ {1...4} dans l'exemple illustré, le système comprend les encodeurs E_{N1} à E_{N6} et E_{Ri}, l'allocateur statistique AS (qui reçoit les informations I_{N1} à I_{N6} et I_{Ri} provenant de ces encodeurs et leur fournit les jeux de paramètres d'encodage J_{N1} à J_{N6} et J_{Ri}) et le multiplexeur Mi (qui génère le signal MPTSi en multiplexant les signaux S_{N1} à S_{N6} et S_{Ri} provenant de ces encodeurs).

L'inconvénient majeur de la deuxième technique connue est le coût exponentiel en infrastructure puisque l'opérateur doit dupliquer autant de fois les encodeurs et l'allocateur statistique que de régions existantes (une tête de réseau par région).

### 3. OBJECTIFS

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant à des régions d'opérer un décrochage régional indépendamment les unes des autres, dans un contexte de multiplexage statistique de programmes d'une pluralité de chaînes de télévision, permettant ainsi d'adapter le contenu régional à une région (localité), sans perturber les autres régions.

Un autre objectif d'au moins un mode de réalisation de l'invention est de fournir une technique permettant de simplifier la gestion opérationnelle d'un décrochage régional (notamment en ne nécessitant aucune intervention (au sens dynamique du terme), que ce soit au niveau de la ferme d'encodage, de l'allocateur statistique ou des multiplexeurs.

Un autre objectif d'au moins un mode de réalisation de l'invention est de fournir une technique permettant d'optimiser la qualité vidéo et l'expérience utilisateur (par exemple pas d'arrêt intempestif de la vidéo) lors d'un décrochage régional (c'est-à-dire lors du passage d'un contenu national à un contenu régional).

### 4. RÉSUMÉ

Dans un mode de réalisation particulier de l'invention, il est proposé un procédé d'encodage et de multiplexage de programmes d'une pluralité de chaînes de télévision comprenant des chaînes nationales, fournissant des programmes nationaux, et au moins un groupe de chaînes régionales, associées chacune à une région différente et fournissant des programmes régionaux, pendant des fenêtres régionales, et partageant des programmes nationaux, hors des fenêtres régionales, le procédé étant mis en oeuvre par un système comprenant :
- une pluralité d'encodeurs associés chacun à une des chaînes de télévision, chaque encodeur recevant les programmes de la chaîne de télévision associée et générant un signal de sortie ;
- un allocateur statistique qui, pour chaque encodeur fonctionnant en débit binaire variable, reçoit au moins une information provenant dudit encodeur et fournit un jeu de paramètres d'encodage audit encodeur ; et
- pour chaque région, associée à une chaîne régionale donnée, un multiplexeur générant un signal multiplexé à partir des signaux de sortie des encodeurs associés aux chaînes nationales et du signal de sortie de l'encodeur associé à la chaîne régionale donnée ;

Les encodeurs associés aux chaînes régionales fonctionnent en débit binaire variable hors et pendant les fenêtres régionales. Un dispositif agrégateur génère au moins une information commune à partir des informations provenant des encodeurs associés aux chaînes régionales. L'allocateur statistique reçoit ladite au moins une information commune et les informations provenant des encodeurs associés aux chaînes nationales, et fournit un jeu dédié de paramètres d'encodage à chaque encodeur associé à une des chaînes nationales, et un jeu commun de paramètres d'encodage aux encodeurs associés aux chaînes régionales.

Le principe général de l'invention consiste donc à faire fonctionner tous les encodeurs (aussi bien ceux associés aux chaînes nationales que ceux associés à un groupe de chaînes régionales) en débit binaire variable (mode VBR), hors et pendant les fenêtres régionales. Ceci est possible grâce à un nouvel élément du système, le dispositif agrégateur (aussi appelé « groupe agrégateur »), qui permet à l'allocateur statistique de gérer l'ensemble des encodeurs associés aux chaînes régionales du groupe comme s'il s'agissait d'un encodeur unique. Pour cela, le dispositif agrégateur substitue aux informations provenant des encodeurs associés aux chaînes régionales du groupe, au moins une information commune (notée I_{g}) qui est fournie à l'allocateur statistique. En fonction de cette au moins une information commune (et des informations provenant des encodeurs associés aux chaînes nationales), l'allocateur statistique génère un jeu de paramètres d'encodage (noté J_{g}) commun aux encodeurs associés aux chaînes régionales du groupe. En d'autres termes, tous les encodeurs associés aux chaînes régionales du groupe fonctionnent en débit binaire variable (mode VBR), mais en utilisant un jeu commun de paramètres d'encodage.

La solution proposée peut être mise en oeuvre pour plusieurs groupes de chaînes régionales. Dans ce cas, le dispositif agrégateur génère au moins une première information commune pour un premier groupe de chaînes régionales, au moins une deuxième information commune pour un deuxième groupe de chaînes régionales, et ainsi de suite. Dans une variante de réalisation, plusieurs dispositifs agrégateurs sont utilisé, chacun pour au moins un groupe de chaînes régionales. De même, l'allocateur statistique génère un premier jeu de paramètres d'encodage commun aux encodeurs associés aux chaînes régionales d'un premier groupe, un deuxième jeu de paramètres d'encodage commun aux encodeurs associés aux chaînes régionales d'un deuxième groupe, et ainsi de suite.

La solution proposée possède plusieurs avantages :
- les décrochages régionaux n'ont plus à être synchronisés :
   o toutes les régions sont indépendantes, ce qui permet une meilleure flexibilité de la gestion des grilles de programme par région, ainsi que la mise en place d'insertion publicitaire ciblée par région ;
   o le décrochage est complètement transparent : imperceptible d'un point de vue expérience utilisateur ;
- l'utilisation permanente du multiplexage statistique permet une meilleure distribution du débit global à travers les différents flux nationaux et régionaux (correspondants aux programmes des différentes chaînes nationales et régionales), et par conséquent, une meilleure qualité vidéo ;
- simplification de la gestion opérationnelle : aucune intervention ou modification n'est nécessaire, tant au niveau de la ferme d'encodage (pas de commutation d'un mode CBR (débit binaire constant) à un mode VBR (débit binaire variable)), qu'au niveau des multiplexeurs (pas de reconfiguration dynamique des tables PMT, ni de commutateurs SW_{R2} à SW_{R4} (voir figures 1 et 2)), ainsi qu'au niveau de l'allocateur statistique (gestion des flux régionaux) ;
- l'architecture proposée est plus simple et moins coûteuse et conserve un écosystème similaire aux solutions existantes. Elle ne nécessite qu'un nouvel élément, le groupe agrégateur qui peut être indépendant des autres composants, ou être incorporé dans un composant existant.

Selon un aspect particulier de l'invention, pour chacun des encodeurs associés aux chaînes régionales, ladite au moins une information appartient au groupe comprenant :
- des informations relatives à une complexité des programmes à encoder par l'encodeur ;
- des informations relatives à un état de l'encodeur ; et
- des informations relatives à un état d'un buffer de réception virtuel associé à l'encodeur.

Dans une réalisation minimaliste, une seule information (d'un des types listés ci-dessus) est utilisée.

Dans une mise en oeuvre particulière, pour chacun des encodeurs associés aux chaînes régionales, ladite au moins une information est un premier n-uplet dont les n composantes sont des informations de n types différents, avec n≥2, et ladite au moins une information commune est un deuxième n-uplet dont chaque composante de rang i, avec i ∈ {1...*n*}, est une combinaison des composantes de même rang i des premiers n-uplets.

L'utilisation de n-uplets d'informations permet à l'allocateur statistique de contrôler plus finement les encodeurs associés aux chaînes régionales du groupe.

Selon une caractéristique particulière, ladite combinaison appartient au groupe comprenant des moyennes, des combinaisons linéaires et une combinaison d'au moins un opérateur MIN et/ou au moins un opérateur MAX.

Dans un autre mode de réalisation de l'invention, il est proposé un système d'encodage et de multiplexage de programmes d'une pluralité de chaînes de télévision comprenant des chaînes nationales, fournissant des programmes nationaux, et au moins un groupe de chaînes régionales, associées chacune à une région différente et fournissant des programmes régionaux, pendant des fenêtres régionales, et partageant des programmes nationaux, hors des fenêtres régionales, ledit système comprenant :
- une pluralité d'encodeurs associés chacun à une des chaînes de télévision, chaque encodeur recevant les programmes de la chaîne de télévision associée et générant un signal de sortie ;
- un allocateur statistique qui, pour chaque encodeur fonctionnant en débit binaire variable, reçoit au moins une information provenant dudit encodeur et fournit un jeu de paramètres d'encodage audit encodeur ; et
- pour chaque région, associée à une chaîne régionale donnée, un multiplexeur générant un signal multiplexé à partir des signaux de sortie des encodeurs associés aux chaînes nationales et du signal de sortie de l'encodeur associé à la chaîne régionale donnée.

Les encodeurs associés aux chaînes régionales sont configurés pour fonctionner en débit binaire variable hors et pendant les fenêtres régionales. Le système comprend un dispositif agrégateur configurer pour générer au moins une information commune à partir des informations provenant des encodeurs associés aux chaînes régionales. L'allocateur statistique est configuré pour recevoir ladite au moins une information commune et les informations provenant des encodeurs associés aux chaînes nationales, et fournir un jeu dédié de paramètres d'encodage à chaque encodeur associé à une des chaînes nationales, et un jeu commun de paramètres d'encodage aux encodeurs associés aux chaînes régionales.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1 et 2, déjà décrites en relation avec l'art antérieur, illustrent une première technique connue pour la prise en compte des décrochages régionaux dans un système à multiplexage statistique ;
- la figure 3, déjà décrite en relation avec l'art antérieur, illustre une deuxième technique connue pour la prise en compte des décrochages régionaux dans un système à multiplexage statistique ;
- la figure 4 illustre une technique selon un mode de réalisation particulier de l'invention, pour la prise en compte des décrochages régionaux dans un système à multiplexage statistique ; et
- la figure 5 présente un exemple de structure du dispositif agrégateur de la figure 4.

### 6. DESCRIPTION DÉTAILLÉE

Sur toutes les figures du présent document, les éléments et étapes identiques sont désignés par une même référence numérique.

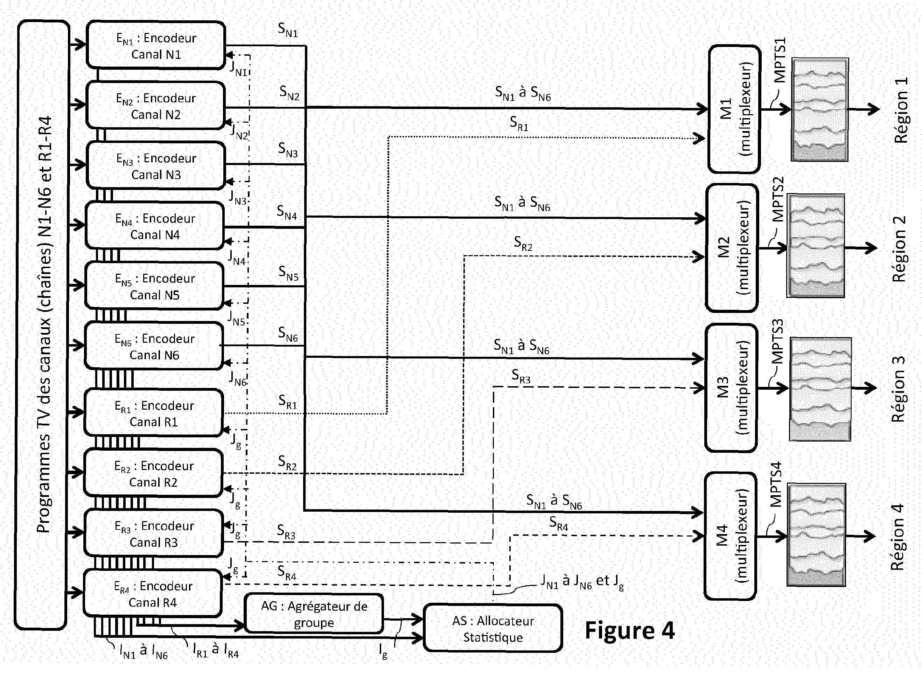

On présente maintenant, en relation avec la **figure 4****,** une technique selon un mode de réalisation particulier de l'invention, pour la prise en compte des décrochages régionaux dans un système à multiplexage statistique.

A titre illustratif uniquement, on considère le même contexte que celui des figures 1 à 3, à savoir l'encodage et le multiplexage d'une pluralité de chaînes de télévision comprenant six chaînes nationales N1 à N6 fournissant des programmes nationaux, et un groupe de quatre chaînes régionales R1 à R4, associées chacune à une région différente (« région 1 » à « région 4 ») et fournissant des programmes régionaux, pendant des fenêtres régionales, et partageant des programmes nationaux, hors des fenêtres régionales.

Par exemple, sur le marché français, les chaînes régionales R1 à R4 pourraient correspondre à quatre chaînes régionales de « France 3 » (c'est-à-dire des chaînes qui diffusent un même contenu national, en dehors des décrochements régionaux, et qui diffusent chacune un contenu régional spécifique, lors d'un décrochement régional).

L'invention n'est bien sûr pas limitée à ce nombre de chaînes nationales, ni à ce nombre de chaînes régionales dans un groupe. Elle n'est pas non plus limitée à un unique groupe de chaînes régionales, et peut être mise en oeuvre avec plusieurs groupes de chaînes régionales.

Comme dans la première technique connue des figures 1 et 2, le système comprend :
- une pluralité d'encodeurs fonctionnant tous en débit binaire variable (mode VBR) hors et pendant les fenêtres régionales, et comprenant des encodeurs E_{N1} à E_{N6} associés aux chaînes nationales N1 à N6 et des encodeurs E_{R1} à E_{R4} associés aux chaînes régionales R1 à R4. Chaque encodeur reçoit les programmes de la chaîne de télévision qui lui associée et génère un signal de sortie : S_{N1} à S_{N6} pour les encodeurs associés aux chaînes nationales N1 à N6, et S_{R1} à S_{R4} pour les encodeurs associés aux chaînes régionales R1 à R4 ;
- un allocateur statistique AS ; et
- des multiplexeurs M1 à M4 (un par région) : le multiplexeur M1 génère un signal MPTS1 pour la région 1 en multiplexant les signaux S_{N1} à S_{N6} et S_{R1}, le multiplexeur M2 génère un signal MPTS2 pour la région 2 en multiplexant les signaux S_{N1} à S_{N6} et S_{R2}, le multiplexeur M3 génère un signal MPTS3 pour la région 3 en multiplexant les signaux S_{N1} à S_{N6} et S_{R3}, et le multiplexeur M4 génère un signal MPTS4 pour la région 4 en multiplexant les signaux S_{N1} à S_{N6} et S_{R4}.

Par rapport à la première technique connue des figures 1 et 2, le système comprend un nouvel élément, à savoir un dispositif agrégateur (aussi appelé « groupe agrégateur ») AG. Ce dernier peut être présent sous différentes formes. Il peut notamment se présenter comme un composant indépendant ou bien être incorporé dans un des composants déjà existants du système (encodeur, allocateur statistique ou multiplexeur par exemple).

Le dispositif agrégateur AG reçoit des informations I_{R1} à I_{R4} provenant des encodeurs E_{R1} à E_{R4} (associés aux chaînes régionales R1 à R4). A partir de ces informations, il génère une ou plusieurs informations communes I_{g}.

L'allocateur statistique AS reçoit cette ou ces informations communes I_{g}, ainsi que les informations I_{N1} à I_{N6} provenant des encodeurs E_{N1} à E_{N6} (associés aux chaînes nationales N1 à N6). A partir de toutes ces informations, l'allocateur statistique fournit un jeu de paramètres d'encodage à chaque encodeur, et plus précisément :
- un jeu dédié de paramètres d'encodage (référencé J_{N1} à J_{N6} respectivement) à chacun des encodeurs E_{N1} à E_{N6}, et
- un jeu commun de paramètres d'encodage (référencé J_{g}) aux encodeurs E_{R1} à E_{R4}.

Ainsi, tous les encodeurs E_{N1} à E_{N6} (associés aux chaînes nationales N1 à N6) fonctionnent en débit binaire variable (mode VBR), chacun avec un jeu de paramètres d'encodage qui lui est dédié (J_{N1} à J_{N6}). Tous les encodeurs E_{R1} à E_{R4} (associés aux chaînes régionales R1 à R4) fonctionnent également en débit binaire variable (mode VBR), mais en utilisant tous le même jeu commun de paramètres d'encodage (J_{g}).

En d'autres termes, la fonction du dispositif agrégateur AG est de substituer aux informations I_{R1} à I_{R4} provenant des encodeurs E_{R1} à E_{R4} traitant un groupe de chaînes régionales R1 à R4 (aussi appelé « groupe de flux »), l'information I_{g}. Ceci permet de présenter ce groupe comme une chaîne de télévision unique à l'allocateur statistique. Autrement dit, l'allocateur statistique gère l'ensemble des encodeurs E_{R1} à E_{R4} comme s'il s'agissait d'un encodeur unique (fictif). C'est pour cet encodeur unique (fictif) que l'allocateur statistique génère le jeu commun de paramètres d'encodage (J_{g}), qui en réalité est utilisé par chacun des encodeurs E_{R1} à E_{R4}.

Dans le cas où plusieurs groupes de chaînes régionales sont traités, ils le sont soit par le même dispositif agrégateur, soit chacun par un dispositif agrégateur distinct.

Outres des informations de synchronisation avec les flux à encoder, les informations I_{N1} à I_{N6} et I_{R1} à I_{R4} (fournies par les encodeurs) sont par exemple des données relatives à l'état des encodeurs et à la complexité des flux à encoder.

Par exemple, chaque encodeur fournit des informations sous la forme d'un triplet (c'est-à-dire un n-uplet avec n=3) composé des informations suivantes :
- une première information (« CPX ») relative à une complexité des programmes à encoder par l'encodeur (aussi appelés « séquence »). Pour cette information de complexité, on prend par exemple la mesure définie dans la demande de brevet français n° FR3002062A1 ou tout autre mesure de complexité ;
- une deuxième information relative à un état de l'encodeur (par exemple une information de type « statistique débit-distorsion », une information relative à la qualité vidéo courante en sortie de l'encodeur (mesure de type PSNR, SSIM, MSE ou tout autre mesure de qualité vidéo), ou encore une information relative au pas de quantification de l'encodeur ;
- une troisième information « RB info » relative à un état d'un buffer de réception virtuel associé à l'encodeur (par exemple « VBV » dans le cas MPEG2, « HRD » ou « cpb » dans les cas H.264 et HEVC).

Dans une réalisation minimaliste, seule une (ou deux) des trois informations listées ci-dessus est (sont) utilisée(s). Dans une autre variante de réalisation, chaque encodeur fournit un n-uplet comprenant plus de trois informations (n>3).

Les critères de combinaison, permettant de passer des informations contenues dans les informations I_{R1} à I_{R4} à ladite au moins une information Ig, peuvent être de différentes natures, suivant les préférences définies par l'opérateur du système.

En particulier, dans le cas particulier où les informations I_{R1} à I_{R4} fournies par les encodeurs E_{R1} à E_{R4} sont des premiers n-uplets, avec n≥2, l'information commune I_{g} est un deuxième n-uplet dont chaque composante de rang i, avec *i* ∈ {1...*n*}, est une combinaison des composantes de même rang i des premiers n-uplets. Cette combinaison est par exemple une moyenne, une combinaison linéaire, ou encore une combinaison d'au moins un opérateur MIN et/ou au moins un opérateur MAX.

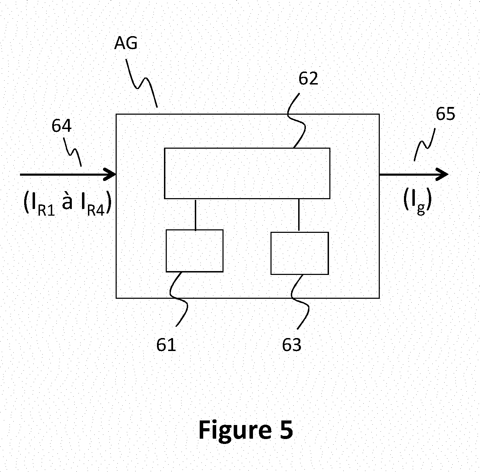

La **figure 5** présente un exemple de structure du dispositif agrégateur AG de la figure 4. Ce dispositif (ou unité, module ou encore circuit) comprend une mémoire vive 61 (par exemple une mémoire RAM), une unité de traitement 62, équipée par exemple d'un processeur, et pilotée par un programme d'ordinateur stocké dans une mémoire morte 63 (par exemple une mémoire ROM ou un disque dur). A l'initialisation, les instructions de code du programme d'ordinateur sont par exemple chargées dans la mémoire vive 61 avant d'être exécutées par le processeur de l'unité de traitement 62.

L'unité de traitement 62 reçoit en entrée 64 les informations I_{R1} à I_{R4} et délivre en sortie 65 l'information I_{g}.

Cette figure 5 illustre seulement une manière particulière, parmi plusieurs possibles, de réaliser le « groupe agrégateur » dont le fonctionnement a été décrit plus haut. En effet, la technique de l'invention se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas d'une implémentation sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non amovible, ce médium de stockage étant lisible partiellement ou totalement par un ordinateur ou un processeur.

## Revendications

1. Procédé d'encodage et de multiplexage de programmes d'une pluralité de chaînes de télévision comprenant des chaînes nationales, fournissant des programmes nationaux, et au moins un groupe de chaînes régionales, associées chacune à une région différente et fournissant des programmes régionaux, pendant des fenêtres régionales, et partageant des programmes nationaux, hors des fenêtres régionales, le procédé étant mis en oeuvre par un système comprenant :
- une pluralité d'encodeurs (E_{N1}-E_{N6}, E_{R1}-E_{R4}) associés chacun à une des chaînes de télévision, chaque encodeur recevant les programmes de la chaîne de télévision associée et générant un signal de sortie (S_{N1-}S_{N6}, S_{R1-}S_{R4}) ;
- un allocateur statistique (AS) qui, pour chaque encodeur fonctionnant en débit binaire variable, reçoit au moins une information (I_{N1}-I_{N6}, I_{R1}-I_{R4}) provenant dudit encodeur et fournit un jeu de paramètres d'encodage (J_{N1}-J_{N6}, J_{R1}-J_{R4}) audit encodeur ; et
- pour chaque région, associée à une chaîne régionale donnée, un multiplexeur (M1-M4) générant un signal multiplexé à partir des signaux de sortie des encodeurs associés aux chaînes nationales et du signal de sortie de l'encodeur associé à la chaîne régionale donnée ;
ledit procédé étant **caractérisé en ce que** les encodeurs (E_{R1}-E_{R4}) associés aux chaînes régionales fonctionnent en débit binaire variable hors et pendant les fenêtres régionales, **en ce qu'**un dispositif agrégateur (AG) génère au moins une information commune (I_{g}) à partir des informations (I_{R1}-I_{R4}) provenant des encodeurs (E_{R1}-E_{R4}) associés aux chaînes régionales, et **en ce que** l'allocateur statistique reçoit ladite au moins une information commune (I_{g}) et les informations (I_{N1}-I_{N6}) provenant des encodeurs (E_{N1}-E_{N6}) associés aux chaînes nationales, et fournit un jeu dédié de paramètres d'encodage (J_{N1}-J_{N6}) à chaque encodeur (E_{N1}-E_{N6}) associé à une des chaînes nationales, et un jeu commun de paramètres d'encodage (J_{g}) aux encodeurs (E_{R1}-E_{R4}) associés aux chaînes régionales.

2. Procédé selon la revendication 1, **caractérisé en ce que**, pour chacun des encodeurs (E_{R1}-E_{R4}) associés aux chaînes régionales, ladite au moins une information (I_{R1}-I_{R4}) appartient au groupe comprenant :
- des informations relatives à une complexité des programmes à encoder par l'encodeur ;
- des informations relatives à un état de l'encodeur ; et
- des informations relatives à un état d'un buffer de réception virtuel associé à l'encodeur.

3. Procédé selon la revendication 2, **caractérisé en ce que**, pour chacun des encodeurs (E_{R1}-E_{R4}) associés aux chaînes régionales, ladite au moins une information (I_{R1}-I_{R4}) est un premier n-uplet dont les n composantes sont des informations de n types différents, avec n≥2, et **en ce que** ladite au moins une information commune (I_{g}) est un deuxième n-uplet dont chaque composante de rang i, avec *i* ∈ {1...*n*}, est une combinaison des composantes de même rang i des premiers n-uplets.

4. Procédé selon la revendication 3, **caractérisé en ce que** ladite combinaison appartient au groupe comprenant :
- des moyennes ;
- des combinaisons linéaires ; et
- une combinaison d'au moins un opérateur MIN et/ou au moins un opérateur MAX.

5. Système d'encodage et de multiplexage de programmes d'une pluralité de chaînes de télévision comprenant des chaînes nationales, fournissant des programmes nationaux, et au moins un groupe de chaînes régionales, associées chacune à une région différente et fournissant des programmes régionaux, pendant des fenêtres régionales, et partageant des programmes nationaux, hors des fenêtres régionales, ledit système comprenant :
- une pluralité d'encodeurs (E_{N1}-E_{N6}, E_{R1}-E_{R4}) associés chacun à une des chaînes de télévision, chaque encodeur recevant les programmes de la chaîne de télévision associée et générant un signal de sortie (S_{N1}-S_{N6}, S_{R1}-S_{R4}) ;
- un allocateur statistique (AS) qui, pour chaque encodeur fonctionnant en débit binaire variable, reçoit au moins une information (I_{N1}-I_{N6}, I_{R1}-I_{R4}) provenant dudit encodeur et fournit un jeu de paramètres d'encodage (J_{N1}-J_{N6}, J_{R1}-J_{R4}) audit encodeur ; et
- pour chaque région, associée à une chaîne régionale donnée, un multiplexeur (M1-M4) générant un signal multiplexé à partir des signaux de sortie des encodeurs associés aux chaînes nationales et du signal de sortie de l'encodeur associé à la chaîne régionale donnée ;
ledit système étant **caractérisé en ce que** les encodeurs (E_{R1}-E_{R4}) associés aux chaînes régionales sont configurés pour fonctionner en débit binaire variable hors et pendant les fenêtres régionales, **en ce qu'**il comprend un dispositif agrégateur (AG) configurer pour générer au moins une information commune (I_{g}) à partir des informations (I_{R1}-I_{R4}) provenant des encodeurs (E_{R1}-E_{R4}) associés aux chaînes régionales, et **en ce que** l'allocateur statistique est configuré pour recevoir ladite au moins une information commune (I_{g}) et les informations (I_{N1}-I_{N6}) provenant des encodeurs (E_{N1}-E_{N6}) associés aux chaînes nationales, et fournir un jeu dédié de paramètres d'encodage (J_{N1}-J_{N6}) à chaque encodeur (E_{N1}-E_{N6}) associé à une des chaînes nationales, et un jeu commun de paramètres d'encodage (J_{g}) aux encodeurs (E_{R1}-E_{R4}) associés aux chaînes régionales.

6. Système selon la revendication 5, **caractérisé en ce que**, pour chacun des encodeurs (E_{R1}-E_{R4}) associés aux chaînes régionales, ladite au moins une information (I_{R1}-I_{R4}) appartient au groupe comprenant :
- des informations relatives à une complexité des programmes à encoder par l'encodeur ;
- des informations relatives à un état de l'encodeur ; et
- des informations relatives à un état d'un buffer de réception virtuel associé à l'encodeur.

7. Système selon la revendication 6, **caractérisé en ce que**, pour chacun des encodeurs (E_{R1}-E_{R4}) associés aux chaînes régionales, ladite au moins une information (I_{R1}-I_{R4}) est un premier n-uplet dont les n composantes sont des informations de n types différents, avec n≥2, et **en ce que** ladite au moins une information commune (I_{g}) est un deuxième n-uplet dont chaque composante de rang i, avec i ∈ {1...*n*}, est une combinaison des composantes de même rang i des premiers n-uplets.

8. Système selon la revendication 7, **caractérisé en ce que** ladite combinaison appartient au groupe comprenant :
- des moyennes ;
- des combinaisons linéaires ; et
- une combinaison d'au moins un opérateur MIN et/ou au moins un opérateur MAX.
